# EUROPEAN PATENT APPLICATION

(11) **EP 0 987 134 A2**
(43) Date of publication of application: **22.03.2000**
(21) Application number: 99116010.2
(22) Date of filing: 14.08.1999
(51) Int. Cl.: B60H 1/32

(54) **Refrigeration circuit and variable orifice device**

(30) Priority: 16.09.1998 JP 26142198
(71) Applicant: Kabushiki Kaisha Toyoda Jidoshokki Seisakusho, Aichi-ken 448-8671 (JP)
(72) Inventor: Kawaguchi, Masahiro, 2 chome, Kariya-shi, Aichi-ken, 448-8671 (JP); Takenaka, Kenji, 2 chome, Kariya-shi, Aichi-ken, 448-8671 (JP)
(74) Representative: Hoeger, Stellrecht & Partner

(57) **Abstract**

The circulation circuit used for an air-conditioning system for a vehicle. The circulation circuit is provided with a variable capacity type compressor, a condenser, a variable orifice device, an evaporator 4, and an accumulator 5 interposed between the evaporator 4 and the compressor 1. The accumulator 5 is used also as a silencer for preventing noise caused due to the self-excited vibration of the internal mechanism of the compressor. The variable orifice device is used as a pressure reducing device and is capable of varying the cross-sectional area of a restricted path provided therein in response to the temperature of the coolant passing through the restricted path. Therefore, it is possible to change the pressure reducing ability in accordance with the change of the flowing rate of the coolant.

## Description

### BACKGROUND OF THE INVENTION

### 1. Field of the Invention

The present invention relates to a refrigeration circuit comprising a compressor for a coolant gas, a condenser for condensing the coolant gas compressed by the compressor, a pressure reducing device for reducing the pressure of the condensed coolant, and an evaporator for endothermically evaporating the pressure-reduced coolant. Also, the present invention relates to a variable orifice device adopted as a pressure reducing device of a refrigeration circuit of the above-described type.

### 2. Description of the Related Art

A refrigeration circuit used for an air-conditioning system for a vehicle (a car air-conditioner) is provided with a compressor for compressing a coolant gas, a condenser for condensing a high-pressure coolant gas fed from the compressor, a pressure reducing device (or a restricted flow resistor) for reducing the pressure of a condensed coolant liquid thus obtained, and an evaporator for endothermically evaporating the pressure-reduced coolant. The refrigeration circuits constituted by these devices are generally classified into two types described below.

A first type of the refrigeration circuit adopts a temperature type expansion valve as a pressure reducing device, and interposes a receiver (a liquid vessel) between the temperature type expansion valve and the condenser. The car air-conditioner is subjected to a significant variation of a rotational speed of an engine used as an actuating source of the compressor or variation of a heat load in a car cabin. Accordingly, the above-mentioned receiver is provided at a position upstream from the expansion valve, for collecting an excessive amount of coolant therein in response to the variation of a necessary amount of the coolant and for separating a gas phase coolant from a liquid phase coolant on the exit side of the condenser so that the liquid phase coolant alone is allowed to be always fed to the expansion valve. An opening degree of the temperature type expansion valve is feedback-controlled based on the exit temperature of the evaporator to regulate a degree of superheat and a circulation rate of the coolant.

A second type of the refrigeration circuit adopts as a pressure reducing device a fixed orifice having no function for regulating the opening degree, and in addition, an accumulator of a tank-shape is interposed between the evaporator and the compressor. The saturated liquid is collected in the accumulator tank due to a coolant fed from the evaporator and a space above the liquid surface is filled with a saturated coolant gas. Then, the coolant gas having a pressure corresponding to a saturated vapor pressure is sucked into the compressor. According to the second type, the accumulator serves for collecting the excessive coolant, in place of the receiver. Also, since a coolant gas of a constant temperature corresponding to the saturated vapor pressure is fed, as a gas to be compressed (suction gas), from the accumulator to the compressor, the accumulator serves for controlling the degree of superheat at an exit of the evaporator.

In addition, the control of the refrigeration capacity is indispensable in the car air-conditioner because the latter is used under various environmental conditions and the variation of the rotational speed of a vehicle engine used as the actuating source of the compressor is significant. As one means for controlling the refrigeration capacity, a variable capacity type compressor is used, capable of adjusting a suction rate and a discharge rate of a coolant gas. Particularly, there have heretofore been many examples and/or studies in a system wherein the variable capacity type compressor is applied to the refrigeration circuit of the first type.

A variable capacity type compressor having a swash plate has been known to be suitable for being incorporated in a car air-conditioner, which is capable of adjusting a suction rate and a discharge rate of a coolant gas by varying a piston stroke while controlling the inclination angle of the swash plate. Generally speaking, the swash plate type compressor (either of a variable capacity type or a capacity-fixed type) has suction valves or discharge valves, for example, of a flap shape in each of cylinder bores accommodating pistons, respectively, so that the flap valves repeat the opening/closing motion in response to states of suction/compression (discharge) stroke of the pistons. In this regard, the flap-shaped suction valve opens during the suction stroke while bending toward the interior of the cylinder bore. Accordingly, a notch is formed in the inner peripheral wall of the cylinder bore, and a stopper is arranged for allowing the suction valve to bend within an allowance but preventing the same from bending in excess of the above-mentioned allowance otherwise to be broken. A length of the notch (a distance from a valve body to the stopper) is a factor for determining a maximum opening degree of the suction valve (this is also a maximum opening degree of a gas-suction hole which is opened or closed by the suction valve). The compression efficiency (Q/L) of the swash plate type compressor is largely relied on the setting of this maximum opening degree. Therefore, the length of the notch is preferably selected as large as possible.

When the variable capacity type compressor having a swash plate is operated at a less gas suction rate in response to a less heat load (that is, in a state wherein the piston stroke is shorter), the suction valve is often subjected to a micro-vibration while maintaining an incomplete state wherein it is neither seated on the stopper to occupy the maximum opening degree nor completely blocks the gas suction hole (such a phenomenon is referred to as a self-excited vibration). Then, the self-excited vibration of the suction valve is transmitted via a circulation piping to the evaporator which may resonate thereto. Especially, when an amount of liquid coolant is less in the evaporator, there might be a problem in that a consonant noise generates due to the resonance.

To solve the problem of noise generation due to the resonance of the evaporator, several countermeasures have been proposed in the prior art. For example, a silencer is provided midway of a piping connecting the evaporator to a suction chamber of the compressor (countermeasure 1); a length of the notch for the suction valve is made shorter so that the suction valve could assuredly be seated at the stopper of the notch even in the small capacity operation (countermeasure 2); and the shape of the suction valve is modified not to coincide with the resonant frequency of the evaporator (countermeasure 3).

The countermeasure 1, however, necessitates the addition of a silencer solely for the purpose of noise-deadening to the refrigeration circuit provided with the receiver, which causes the complication of the air-conditioning system to result in the increase in production cost. Although the countermeasure 2 might prevent the evaporator from resonating, the compression efficiency (Q/L) of the compressor is sacrificed therefor. According to the countermeasure 3, it is necessary to change a design of the configuration of the suction valve or others for every types of the evaporator, which significantly restricts the general-purpose properties of the compressor. As described above, in the refrigeration circuit adopting the combination of the receiver and the expansion valve, there has heretofore been no commercially decisive countermeasure against the generation of noise due to the resonance of the evaporator with the suction valve in the compressor.

On the other hand, in the refrigeration circuit adopting the combination of the fixed state orifice and the accumulator, the tank-shaped accumulator disposed between the evaporator and the compressor may be used as a silencer. Therefore, it is possible to sufficiently prolong the notch for the suction valve so that the compression efficiency (Q/L) is enhanced without worrying about the self-excited vibration of the suction valve of the capacity-variable compressor.

Practically speaking, however, the above-mentioned variable capacity type compressor has scarcely been used as a compressor for the refrigeration circuit provided with the fixed state orifice and the accumulator. This is because the fixed state orifice used as a pressure reducing device has no function for regulating the opening degree (throttling degree) and is incapable of responding to the large variation in the circulation rate of the coolant even if the circulation rate of the coolant is variable mainly relied on the compressor having a capacity-variable function. That is, while the throttling degree of the fixed state orifice is determined based on the estimated value of the circulation rate of the coolant, the throttling capacity of the fixed state orifice is often improper when the actual circulation rate of the coolant is largely deviated from the estimated value.

Under the circumstances, it is usual that an ordinary compressor having no variable capacity function is used in the refrigeration circuit including the fixed state orifice and the accumulator, and the cooling capacity of the car air-conditioner is controlled by the ON-OFF control of a clutch mechanism for a power transmission provided between the compressor and the vehicle engine.

### SUMMARY OF THE INVENTION

The present invention has been done to solve the above-mentioned problems in the prior art. An object thereof is to provide a refrigeration circuit capable of responding to the variation of the circulation rate of the coolant while effectively preventing or decreasing the generation of noise due to the resonance of the internal mechanism of the compressor to the evaporator, without lowering the compression efficiency of the compressor. Also, another object of the present invention is to provide a variable orifice device useful for such a refrigeration circuit.

The present invention provides a refrigeration circuit comprising a compressor for a coolant gas, a condenser for condensing the coolant gas compressed by the compressor, a pressure reducing device for reducing the pressure of the condensed coolant, and an evaporator for endothermically evaporating the pressure-reduced coolant. The refrigeration circuit is characterized in that an accumulator is provided between the evaporator and the compressor and functions as a silencer, and the pressure reducing device comprises a variable orifice device capable of varying a cross-sectional area of a restricted path provided therein in response to the variation of a circulation rate of the coolant in the refrigeration circuit.

According to this arrangement, it is possible to use the accumulator as a silencer adopted in place of a receiver in the refrigeration circuit, for preventing or decreasing the generation of noise due to the resonance of the evaporator to the internal mechanism of the compressor. Also, since the variable orifice device is adopted, having a function for varying the cross-sectional area of the restricted path, it is possible to cause the pressure reducing capacity of the pressure reducing device to respond to the variation of the circulation rate of the coolant in the refrigeration circuit.

Preferably, the variable orifice device adopted as the pressure reducing device is capable of varying a cross-sectional area of the restricted path provided therein in response to the variation of a temperature of the coolant flowing through the restricted path.

According to this arrangement, the variable orifice device is provided as a pressure reducing device on the exit side of the condenser in the refrigeration circuit. The temperature of the coolant passing through the restricted path in the variable orifice device corresponds to the temperature of the exit of the condenser, which in turn is influenced by a flow rate of external air blowing to the condenser; i.e., a vehicle speed; which therefore corresponds to loading conditions of the vehicle engine deciding the vehicle speed. In addition, the vehicle engine has the influence, as an actuating source for the compressor, on the discharging capacity of the compressor and therefore on the circulation rate of the coolant in the refrigeration circuit. Accordingly, it is possible to variably control the cross-sectional area of the restricted path with reference to the temperature of the coolant passing through the restricted path (i.e., the exit temperature of the condenser) as the estimation of the circulation rate of the coolant in the refrigeration circuit.

Preferably, the variable orifice device comprises a movable member for varying the cross-sectional area of the restricted path, and an actuating mechanism adopting a bimetal operatively connected to the movable member to position the movable member in response to the temperature of the coolant.

According to this arrangement, it is possible to variably control the cross-sectional area of the restricted path based on the coolant temperature at the exit of the condenser which is influenced by the circulation rate of the coolant in the refrigeration circuit.

Preferably, the variable orifice device has at least two restricted paths, one of which is made to open or close by the movable member so that a total restricted cross-sectional area is variable stepwise.

According to this arrangement, it is possible to easily control the cross-sectional area of the restricted path in a stepwise manner based on the coolant temperature at the exit of the condenser which is influenced by the circulation rate of the coolant in the refrigeration circuit.

Preferably, the compressor is a variable capacity type compressor comprising cylinder bores, pistons accommodated in the cylinder bores to be able to reciprocate, tongue-like valves operative to open and close compression chambers defined in the cylinder bore when the coolant gas is introduced into and discharged from the compressor chambers in response to the reciprocation of the pistons, and stoppers for restricting the opening action of the flap valves.

When such a variable capacity type compressor as described above is incorporated in the refrigeration circuit, there might be a problem caused by the influence of the self-excited vibration of the tongue-like valves used as an internal mechanism of the compressor. According to this invention, however, noise generated from the resonance of the evaporator due to the self-excited vibration of the tongue-like valves is cancelled by the accumulator. Thereby, it is possible to design the refrigeration circuit so that a distance from a member forming the flap valves to the stopper becomes sufficiently large to enhance the efficiency of the compressor.

The present invention also provides a variable orifice device arranged as a pressure reducing device between a condenser and an evaporator constituting a refrigeration circuit, comprising at least one restricted path for passing a coolant from the condenser to the evaporator, a movable member movable to vary the cross-sectional area of the restricted path, and an actuating mechanism adopting a bimetal operatively connected to the movable member to position the movable member in response to the temperature of the coolant.

This variable orifice device is extremely suitable for the refrigeration circuit using the above-mentioned accumulator.

### BRIEF DESCRIPTION OF THE DRAWINGS

The present invention will become more apparent from the following description of the preferred embodiments, with reference to the accompanying drawings, in which:
Fig. 1 is a diagrammatic view of a refrigeration circuit according to the embodiment of the present invention;
Fig. 2 is a cross-sectional view of a variable capacity type compressor having a swash plate adapted for use in the refrigerating circuit of the present invention;
Fig. 3 is an enlarged cross-sectional view of a part of the compressor shown in Fig. 2;
Fig. 4 is a cross-sectional view of a variable orifice device in an open state adapted for use in the refrigerating circuit of the present invention;
Fig. 5 is a cross-sectional view of the variable orifice device in a closed state; and
Fig. 6 is a cross-sectional view of a variable orifice device of another embodiment usable for the present invention.

### DESCRIPTION OF THE PREFERRED EMBODIMENTS

One embodiment of the present invention applied to a refrigeration circuit for an air-conditioning system for a vehicle will be described below with reference to the attached drawings.

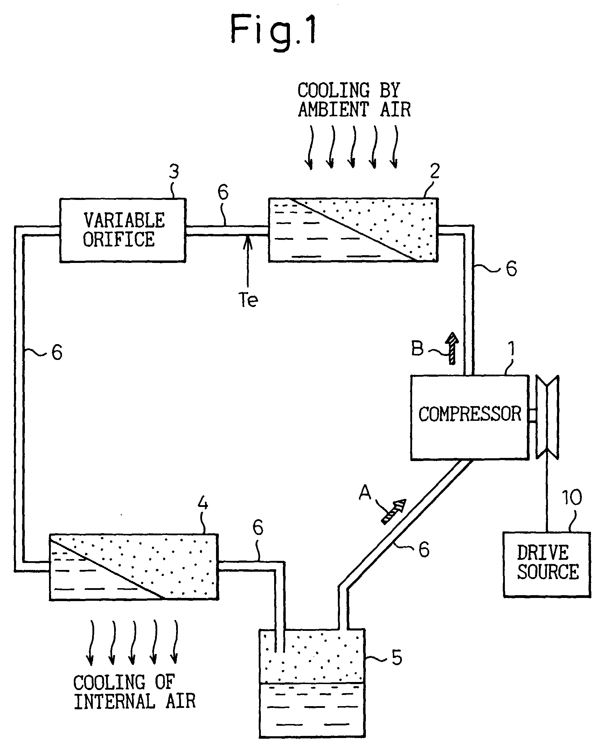

Fig. 1 illustrates a refrigeration circuit for an air-conditioning system for a vehicle according to this embodiment. The refrigeration circuit includes a coolant gas compressor 1, a condenser 2 provided on the discharge side of the compressor 1, a variable orifice device 3 used as a pressure reducing device (or a restricted flow resistor) arranged on the exit side (downstream side) of the condenser 2, an evaporator 4 arranged on the downstream side of the device 3, and an accumulator 5 arranged between the exit (the downstream side) of the evaporator 4 and the suction side of the compressor 1. These circuit elements 1 to 5 are connected to each other via piping or the like 6 to define a circulation path for a coolant.

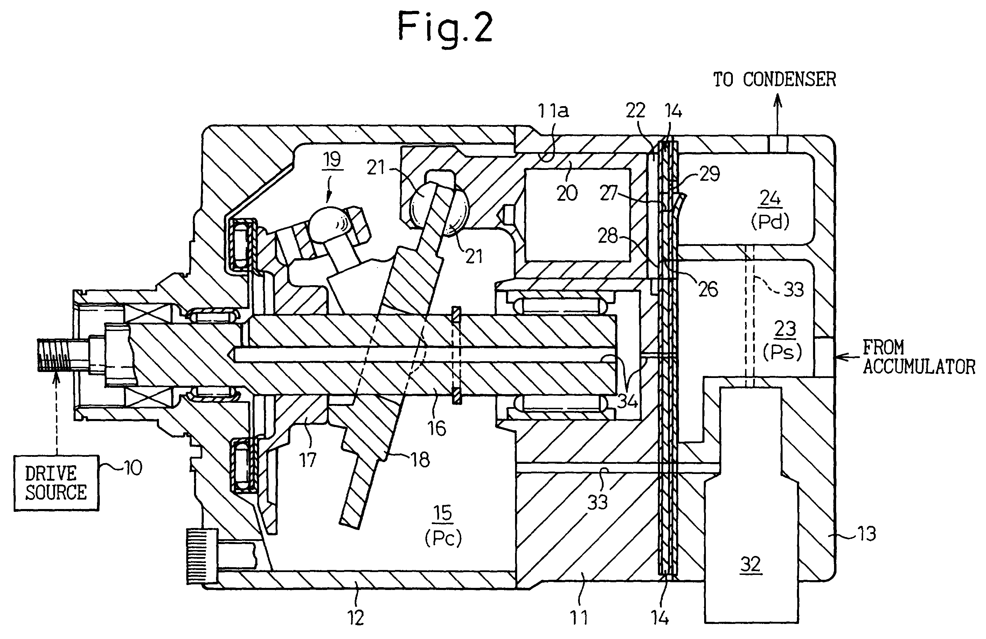

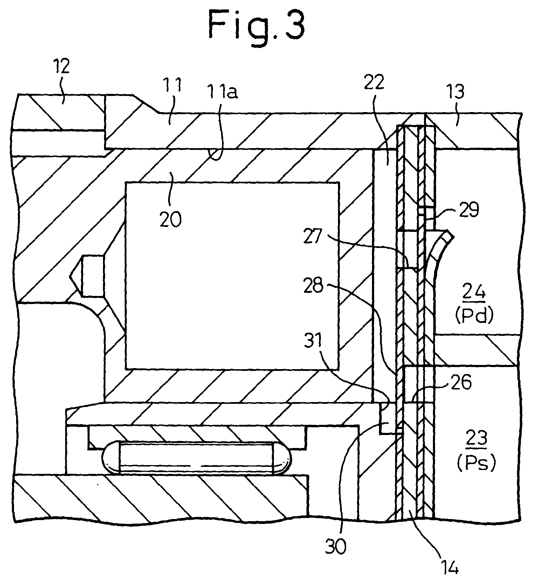

The compressor 1 sucks a coolant gas of a saturation vapor pressure from the accumulator 5 as shown by the arrow A and discharges the same after being compressed to the condenser 2 as shown by the arrow B. The compressor 1 is preferably a variable capacity type compressor, more preferably a variable capacity type compressor having a swash plate as shown in Figs. 2 and 3. Details of the compressor 1 shown in Figs. 2 and 3 will be described later.

The condenser 2 in Fig. 1 is a kind of heat-exchanger, and has a primary function for condensing a high pressure coolant gas discharged from the compressor 1 to a liquid coolant. Generally, the condenser 2 is disposed in a front area of the interior space of an engine room of the vehicle (for example, in the vicinity of a radiator) to be cooled by external air blowing thereto when the vehicle is running. In this respect, the capacity of the condenser 2 for condensing the coolant gas is influenced by the travelling speed of the vehicle. The pressure of the liquid coolant obtained by the condenser 2 is reduced by the variable orifice device 3 and the coolant is in a pressure-reduced state (in a liquid phase, a mist phase or partly gas phase) to the evaporator 4. Details of the variable orifice device 3 will be described later.

The evaporator 4 in Fig. 1 is a kind of heat-exchanger, and has a primary function for carrying out the heat-exchange between the coolant in a pressure-reduced state fed from the variable orifice device 3 and air within a car cabin. That is, in the evaporator 4, the coolant in the pressure-reduced state absorbs heat of the air within the car cabin and cools the air in the car cabin is cooled while it is substantially completely evaporated.

The accumulator 5 shown in Fig. 1 is a tank-shaped circuit element interposed between the evaporator 4 and the compressor 1. A saturated liquid coolant is collected in a lower space of the accumulator 5 due to the coolant fed from the evaporator 4. Thus, the accumulator 5 serves as a storage tank for storing an excessive amount of liquid coolant. Also, an upper space above the liquid surface of the saturated liquid coolants, i.e., the remaining gas phase area within the accumulator 5, is filled with a coolant gas having a saturation vapor pressure. The gas phase area of the accumulator 5 is communicated with a suction chamber 23 of the compressor 1 (see Fig. 2), whereby the coolant gas of the saturation vapor pressure is introduced into the suction chamber 23. Accordingly, the coolant gas introduced into the suction chamber 23 of the compressor 1 is also maintained at a constant temperature corresponding to the saturation vapor pressure. From such a point of view, the accumulator 5 serves for controlling the degree of superheat at the exit of the evaporator 4. In this regard, the degree of superheat stands for the temperature difference between the exit temperature of the evaporator 4 and the suction temperature of the compressor 1.

### Variable Orifice Devices

The variable orifice device 3 shown in Fig. 1 has a function for variably controlling the cross-sectional area of the restricted path formed in the device in response to the temperature of the coolant passing through the restricted path.

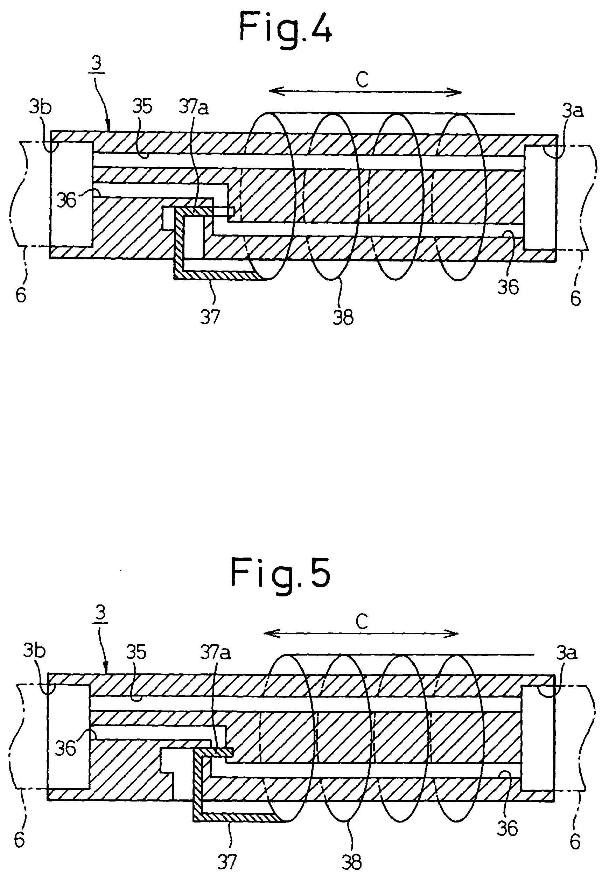

Figs. 4 and 5 show one arrangement of the variable orifice device 3. The variable orifice device 3 has an inlet 3a connected to the exit of the condenser 2, and an exit 3b connected to the inlet of the evaporator 4. The variable orifice device 3 has two restricted paths 35 and 36 interconnecting the inlet 3a and the exit 3b.

The first restricted path 35 has a restricted cross-sectional area S1 (or an inner diameter) smaller than a communication cross-sectional area S0 (or an inner diameter) of the circulation piping 6. Similarly, the second restricted path 36 has a restricted cross-sectional area S2 (or an inner diameter) smaller than a communication cross-sectional area S0 (or an inner diameter) of the circulation piping 6. The sum of the cross-sectional areas (S1 + S2) of the two restricted paths 35 and 36 is also sufficiently smaller than the communication cross-sectional area S0 of the circulation piping 6.

As shown in Fig. 4, the second restricted path 36 has a bend midway thereof bending in the radial direction of the variable orifice device 3. In the vicinity of the bend, a movable member 37 is provided to be movable in the axial direction of the variable orifice device 3 so that a finger portion 37a thereof is capable of opening or closing the bend portion of the second restricted path 36 in accordance with position of the movable member 37. More concretely, when the movable member 37 is located at an advanced position shown in Fig. 4, the finger portion 37a of the movable member 37 is accommodated in the wall of the variable orifice device 3 to completely open the second restricted path 36. On the other hand, when the movable member 37 is located at a retreated position shown in Fig. 5, the finger portion 37a of the movable member 37 projects from the wall of the variable orifice device 3 into the bend portion to completely close the second restricted path 36.

Positioning of the movable member is carried out by an actuating mechanism 38 using a bimetal. Although the bimetal type actuating mechanism 38 is illustrated in Figs. 4 and 5 as if it is of a coil spring form, this does not mean that the actuating mechanism 38 is restrictively formed of a coil spring member but merely means that the expansion and contraction thereof in accordance with the temperature variation are similar to the operation of the coil spring.

The bimetal type actuating mechanism 38 is operatively connected to the movable member 37 and expands or contracts as shown by the arrow C in response to the temperature of the coolant passing through the first and second restricted paths 35 and 36. (Note most of the coolant is in a liquid phase in the upstream region of the respective path). More concretely, when the coolant temperature is low (i.e., the exit temperature Te of the condenser 2 is low), the bimetal type actuating mechanism 38 expands to locate the movable member 37 at the advanced position (see Fig. 4). At this time, both of the first and second restricted paths 35, 36 are in an open state, whereby the total restricting capacity of the variable orifice device 3 corresponds to the sum of the cross-sectional areas (S1 + S2) of both the restricted paths. On the other hand, when the coolant temperature is high (i.e., the exit temperature Te of the condenser 2 is high), the bimetal type actuating mechanism 38 contracts to locate the movable member 38 at the retreated position (see Fig. 5). At this time, the first restricted path 35 is in an open state but the second restricted path 36 is in a closed state, whereby the total restricting capacity of the variable orifice device 3 corresponds to the cross-sectional area S1 of the first restricted path 35. In this manner, the variable orifice device 3 of this embodiment is capable of automatically varying the restricting capacity in response to the exit temperature Te of the condenser.

### Variable Capacity Type Compressor having Swash Plate

The compressor 1 shown in Figs. 2 and 3 is provided with a cylinder block 11, a front housing 22 fixedly secured to a front end surface of the cylinder block 11, and a rear housing 13 fixedly secured to a rear end surface of the cylinder block 11 via a valve-forming member 14. These elements 11, 12, 13 and 14 constitutes a housing of the compressor 1. A crank chamber 15 is defined in the front housing 12 by the front end surface of the cylinder block 11. In the crank chamber 15, there are arranged a rotatable shaft 16, a rotatable support 17 fixed to the rotatable shaft 16, a swash plate 18 held to be slidable in the axial direction and tiltable relative to the rotatable shaft 16, and a hinge mechanism 19 interposed between the rotatable support 17 and the swash plate 18. According to the interposing hinge mechanism 19, the swash plate 18 is rotatable with the rotatable shaft 16 while being tiltable to the rotatable shaft 16.

A plurality of cylinder bores 11a (only one is shown in the drawing) are formed in the cylinder block 11, each of which accommodates a reciprocatable piston 20 therein. On end of the respective piston 20 is fitted to the circumference of the swash plate 18 via shoes 21, and a compression chamber 22 is defined in the respective bore 11a between the other end surface of the piston 20 and the valve-forming member 14. As the rotatable support 17, the hinge mechanism 19 and the swash plate 18 are made to rotate together with the rotatable shaft 16 operatively connected to a vehicle engine 10 used as an external actuating source, the respective piston 20 reciprocates forward and backward within the cylinder bore 11a. In this regard, the external actuating source 10 and the rotatable shaft 16 are operatively connected, directly or indirectly via a clutch mechanism such as a magnetic clutch, to each other by a pulley-belt transmission mechanism (now shown).

A suction chamber 23 and a discharge chamber 24 are defined within the rear housing 14 by the valve-forming member 14. The valve-forming member 14 comprises at least three metallic sheets superposed with each other. The valve-forming member 14 has a suction hole 26 and a discharge hole 27 formed in correspondence to the respective cylinder bore 11a (or the compression chamber 22), and a suction valve 28 and a discharge valve 29 are formed as tongue-like valves in correspondence to the holes 26, 27 respectively.

The respective suction valve 28 is arranged within the compression chamber 22 (the side of the valve-forming plate 14 closer to the piston 20) and is of a tongue shape, more concretely a flap shape. The respective suction valve 28 bends toward the piston 20 during the suction stroke of the piston 20 (the motion from the top dead center to the bottom dead center) to open the suction hole 26 whereby the coolant gas is sucked from the suction chamber 23 into the compression chamber 22. Particularly, as shown in Fig. 3, a notch 30 is formed in the peripheral inner wall of the cylinder bore 11a in correspondence to the flap-shaped suction valve 28. A tip end (a lower end in Fig. 3) of the flap-shaped suction valve 28 enters the notch 30. The notch 30 is adapted, on one hand, to allow the suction valve 28 to bend within an allowance but, on the other hand, a part of the notch 30 constitutes a stopper 31 to prevent the suction valve 28 from excessively bending over the abovementioned allowance which may otherwise results in breakage of the suction valve 28. A distance from the valve-forming member 14 to the stopper 31 corresponds to a length of the notch 30. In accordance with this length, the maximum opening degree of the suction valve 28 (which is also the maximum opening degree of the suction hole 26 to open or close by the action of the suction valve 28) is determined.

The coolant gas sucked into the respective cylinder bore 11a is discharged into the discharge chamber 24 during the compression/discharge stroke of the piston 22 (the motion from the bottom dead center to the top dead center) while pushing the flap-shaped discharge valve 29 toward the discharge chamber 24.

As is generally known, the discharging capacity of the variable capacity type compressor having a swash plate 18 is variably regulated by the control of the inner pressure of the crank chamber 15 (crank pressure Pc) be means of a capacity control valve 32. That is, if the crank pressure Pc becomes higher by the action of the control valve 32, the inclination angle of the swash plate 18 becomes smaller, whereby the stroke of the piston 20 decreases to lower the discharging capacity. On the contrary, if the crank pressure Pc becomes lower by the action of the control valve 32, the inclination angle of the swash plate 18 becomes larger, whereby the stroke of the piston 20 is prolonged to increase the discharging capacity. In this case, the capacity control valve 32 may be of either a so-called input-control type or output-control valve, or of either a so-called internal control type or external control type. The control valve 32 in Fig. 2 is illustrated as an external control valve of an input-control type provided midway of an air-feeding path 33 connecting the discharge chamber 24 to the crank chamber 15. Note that in Fig. 2, a bleeding path 34 for releasing the coolant gas in the crank chamber 15 to the suction chamber 23 is constituted by a path axially formed along the axis of the rotatable shaft 16 and a through-hole formed in alignment with this path through the cylinder block 11 and the valve-forming member 14.

### Operation

When the vehicle engine rotates at a low speed, the discharging capacity of the compressor 1 per unit time becomes small, whereby the circulation rate of the coolant passing through the circulation piping 6 also decreases. Similarly, when the vehicle engine rotates at a low speed, the amount of external air blowing to the condenser 2 also decreases to lower the condensation capacity of the condenser 2, resulting in the rise of the exit temperature Te of the condenser 2. Thus, if the exit temperature Te of the condenser 2 rises, the bimetal type actuating mechanism 38 contracts to locate the movable member 37 to the retreated position (see Fig. 5) and the second restricted path 36 is closed. As a result, the restricting capacity of the variable orifice device 3 (the amount of coolant passing through the restricted path per unit time) decreases as a whole.

On the other hand, when the vehicle engine rotates at a high speed, the discharging capacity of the compressor 1 per unit time becomes large, whereby the circulation rate of the coolant passing through the circulation piping 6 also increases. Similarly, when the vehicle engine rotates at a high speed, the amount of external air blowing to the condenser 2 also increases to elevate the condensation capacity of the condenser 2, resulting in the lowering of the exit temperature Te of the condenser. Thus, if the exit temperature Te of the condenser 2 lowers, the bimetal type actuating mechanism 38 expands to locate the movable member 37 to the advanced position (see Fig. 4) and the second restricted path 36 is opened. As a result, the restricting capacity of the variable orifice device 3 (the amount of coolant passing through the restricted path per unit time) increases as a whole.

According to this embodiment, the following effects are obtainable.

The variable orifice device 3 as a pressure reducing device is capable of automatically adjusting the cross-sectional area thereof in response to the temperature of the coolant passing through the restricted paths 35 and 36 provided in the device (i.e., the exit temperature Te of the condenser). Thereby, even of the discharging capacity of the variable capacity type compressor 1 having the swash plate type varies due to the variation of the rotational speed of the external actuating source and the circulation rate of the coolant largely varies in the refrigeration circuit, it is possible to automatically change the restricting capacity of the variable orifice device 3 to positively respond to the variation of the circulation rate of the coolant.

Since the accumulator 5 is of a tank type interposed between the suction side of the compressor 1 and the evaporator 4, the accumulator 5 serves as a silencer by the adaptation of its shape. Accordingly, it is possible to guarantee a sufficient length of the notch 30 for the suction valve without worrying about the self-excited vibration of the suction valve 28 of the swash plate type compressor 1 so that the compression efficiency (Q/L) of the compressor 1 is enhanced.

Note the embodiment of the present invention may be modified as follows.

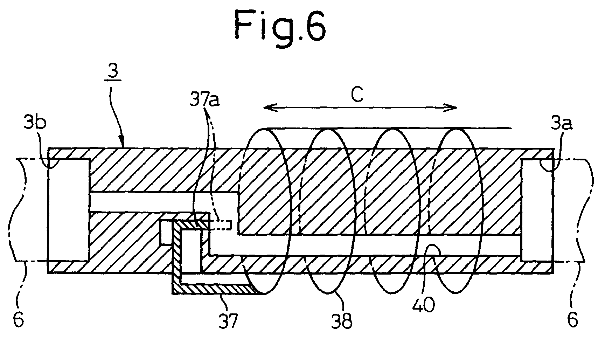

The variable orifice device 3 shown in Figs. 4 and 5 has the two restricted paths 35 and 36, one of which is controlled in an on-off manner to variably control the restricting amount. Alternatively thereto, as shown in Fig. 6, only one restricted path 40 may be provided within the variable orifice device 3. In this case, the cross-sectional area of the path 40 is defined to be somewhat larger than the path 35 or 36, and the movable member 37 is adapted so that, when the movable member 37 is switched from the advanced position to the retreated position, the finger portion 37a thereof moves from a position completely accommodated in the wall of the device (indicated by the solid line in Fig. 6) to an intermediate position (indicated by a broken line in Fig. 6) wherein the finger portion 37a does not completely block the path 40. As a result, according to the variable orifice device shown in Fig. 6, the cross-sectional area of the restricted path 40 is variably controlled so that, for example, the cross-sectional area thereof is (S1 + S2) when the finger portion 37a is located at the accommodated position, while it is S1 when located at the intermediate position, in accordance with the position of the movable member 37 in response to the temperature of the coolant passing through the throttling path 40.

While the variable orifice devices 3 shown in Figs. 4, 5 and 6 are capable of varying the cross-sectional area thereof in a stepwise manner, the infinite switching may be possible, wherein the cross-sectional area of the restricted path may be continuously varied from 0% to 100%, for example.

It will be apparent that the following features fall within the scope of the present invention.

The refrigeration circuit defined by claims may be applicable to a vehicle air-conditioning system.

The variable orifice device defined by claims may be provided with two or more restricting paths, one of which is opened or closed by the movable member so that the cross-sectional area of the variable orifice device is variable stepwise as a whole.

A method for cancelling noise generated in a refrigeration circuit having a reciprocating piston type compressor with a tongue-like valve which is subjected to a self-excited vibration during the transfer of coolant gas from the compression chamber to the suction chamber or the discharge chamber in the cylinder bore, a condenser, and an evaporator, wherein a tank-shaped accumulator is interposed between the compressor and the evaporator, characterized in that the accumulator is used as a silencer for cancelling noise generated due to the self-excited vibration of the tongue-like valve.

As described in detail above, according to the refrigeration circuit of the present invention, it is possible to effectively prevent or decrease the generation of noise due to the resonance of the internal mechanism of the compressor and the evaporator without lowering the compression efficiency of the compressor. Also, even if the circulation rate of the coolant largely varies in the refrigeration circuit, for example, since the power supplied to the compressor from the actuating source frequently fluctuates or the compressor is of a variable capacity type, it is possible to switch the pressure reducing capacity in response to the variation of the circulation rate of the coolant by using the above-mentioned variable orifice device as a pressure reducing device.

## Claims

1. A refrigeration circuit comprising:
a compressor for a coolant gas;
a condenser for condensing the coolant gas compressed by the compressor;
a pressure reducing device for reducing the pressure of the condensed coolant, said pressure reducing device comprising a variable orifice device capable of varying a cross-sectional area of a restricted path provided therein in response to the variation of a circulation rate of the coolant in the refrigeration circuit;
an evaporator for endothermically vaporizing the decompressed coolant; and
an accumulator provided between the evaporator and the compressor and also functioning as a silencer.

2. A refrigeration circuit as defined by claim 1, wherein the variable orifice device as the pressure reducing device is arranged so that a cross-sectional area of the restricted path provided therein is variable in response to the variation of a temperature of the coolant flowing through the restricted path.

3. A refrigeration circuit as defined by claim 2, wherein the variable orifice device comprises a movable member for varying the cross-sectional area of the restricted path, and an actuating mechanism adopting a bimetal operatively connected to the movable member to position the movable member in response to the temperature of the coolant.

4. A refrigeration circuit as defined by claim 3, wherein the variable orifice device has at least two restricted paths, one of which is made to open or close by the movable member so that a total restricted cross-sectional area is variable stepwise.

5. A refrigeration circuit as defined by claim 1, wherein the compressor is a variable capacity type compressor comprising cylinder bores, pistons reciprocatingly accommodated in the cylinder bores, tongue-like valves operative to open and close compression chambers defined in the cylinder bores when the coolant gas is introduced into and discharged from the compression chambers in response to reciprocal movement of the pistons, and stoppers for restricting the opening action of the tongue-like valves.

6. A variable orifice device arranged as a pressure reducing device between a condenser and an evaporator constituting a refrigeration circuit, said device comprising:
at least one restricted path for passing a coolant from the condenser to the evaporator, a movable member movable to vary the cross-sectional area of the at least one throttling path, and an actuating mechanism adopting a bimetal operatively connected to the movable member to position the movable member in response to the temperature of the coolant.
